(19) Europäisches Patentamt
European Patent Office
Office européen des brevets

(11) **EP 1 967 924 A1**

(12) **EUROPEAN PATENT APPLICATION**

(43) Date of publication:
**10.09.2008 Bulletin 2008/37**

(51) Int Cl.:
***G05B 19/19*** *(2006.01)*

(21) Application number: **08004174.2**

(22) Date of filing: **06.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.03.2007 JP 2007058442**

(71) Applicant: **FANUC LTD**
**Minamitsuru-gun,**
**Yamanashi 401-0597 (JP)**

(72) Inventors:
• **Maeda, Kazuomi**
 **Minamitsuru-gun**
 **Yamanashi 401-0597 (JP)**

• **Sonoda, Naoto**
 **Minamitsuru-gun**
 **Yamanashi 401-0597 (JP)**
• **Toyozawa, Yukio**
 **Minamitsuru-gun**
 **Yamanashi 401-0597 (JP)**

(74) Representative: **Thum, Bernhard**
 **Wuesthoff & Wuesthoff**
 **Patent- und Rechtsanwälte**
 **Schweigerstrasse 2**
 **81541 München (DE)**

(54) **Apparatus for synchronously controlling a plurality of servomotors**

(57) A servo controller for synchronously controlling a master driving source for driving a driving shaft and a slave driving source for driving a driven shaft, having a position control section that performs a position control based on a positional deviation which is a difference between a position command value given to the slave driving source and a feedback value detected from the slave driving source, an operational section that calculates a synchronization error which is a difference of the positional deviation between the master driving source and the slave driving source, and a correction data calculating section that calculates first correction data for correcting the positional deviation of the slave driving source.

EP 1 967 924 A1

**Description**

Background of the Invention

1. Field of the Invention

The present invention relates to a servo controller which is applied to a machine tool for machining a work piece, or a robot, a press machine, an injection molding machine, and the like, that controls a master driving source and a slave driving source in synchronism with each other for performing repeatedly the same machine processing operation such as thread cutting or tapping operation on a work piece.

2. Description of the Related Art

Generally, when an external thread is cut on an outer circumferential surface of a work piece, the thread cutting operation is performed by providing a thread cutting tool with a predetermined cutting depth and moving the thread cutting tool in a relative linear movement in the direction of the axis of the work piece while rotating the work piece chucked on a main spindle. In order to avoid excessive cutting force, the cutting depth is provided to the cutting tool in several divisions, and a complete thread shape is obtained by repeating the cutting operation with a predetermined cutting depth for a predetermined number of passes. When an internal thread is cut on a work piece using a tapping tool, the work piece is secured on a table that is movable in a X-Y direction, and the thread cutting operation is performed by rotating and feeding the tapping tool mounted on the main spindle in the direction of a rotational axis, or by feeding the work piece in the direction of the rotational axis while the tapping tool is being rotated.

The feed rate of a thread cutting tool in the case of cutting an external thread, or the feed rate of a tapping tool in the case of cutting an internal thread, is determined in dependence on the rotational speed of the work piece or the rotational speed of the tapping tool such that threads can be formed continuously at a predetermined pitch. Thus, the movement command (the feed rate) for a cutting tool or a tapping tool to be moved in a linear movement is in a constant ratio to the rotation command (rotational speed) for rotating the work piece or rotating the tapping tool. Therefore, in such a thread cutting operation or a tapping operation, a rotation command and a movement command are given by a numerical controller of a machine tool such that both driving sources (servo motors) drive and operate in synchronism at a constant ratio.

Here, as an example, a case where a thread with a pitch of 1 mm is cut at 6000 $min^{-1}$ will be explained below. Let the position detecting unit of a feed shaft driven by one of the driving sources be 10000 pulses/mm, and the position detecting unit of the rotational shaft driven by the other of the driving sources be 4096 pulses/rev. In view of the movement command of the feed shaft, 6000 $min^{-1}$, one revolution takes 10 ms, and the advance of 1 mm means 10000 pulses/10 ms. Thus, the feed rate is 6 m/min. Since the rotational shaft is rotated one revolution, 4096 pulses, in 10 ms, that is 4096 pulses/10 ms. Thus, the ratio of the two driving axes is K = 4096/10000. Therefore, in order to cut a thread with a pitch of 1 mm, the movement command for the driving source for driving the feed shaft can be multiplied by 4096/10000 to obtain the movement command for the driving source for driving the rotational shaft.

In Japanese Patent Publication No. 2004-280772, there is disclosed an example of a prior art controller for repeatedly carrying out processing of same shape by operating the driving sources for driving a rotational shaft and a feed shaft in synchronism.

In machine processing of external threads or internal threads, if a plurality of driving sources that are controlled in synchronism have the same servo characteristics, the rotational shaft and the feed shaft have same positional deviation, and thus do not give rise to synchronization error in principle. However, when the moment of inertia of the rotational shaft increases with increasing rigidity of the rotational shaft, or when the rotational shaft is rotated in high speed, the servo characteristics of the rotational shaft may become lower than that of the feed shaft, and this may give rise to a large positional deviation at the time of acceleration or deceleration of the rotational shaft. Although such a synchronization error can be gradually converged to a small value by learning control, the effect of learning control can be achieved only after the position command is repeated many times. Therefore, there was a problem that the effect of learning could not be obtained in the first time control, resulting in a large synchronization error. Thus, each time the position command was altered, an operator performed the learning control several times, and on the basis of the correction data thus obtained, the synchronization error could be reduced. Therefore, in order to reduce the synchronization error when the first control is performed, an extra procedure was required such that the memory of the learning control section was laid aside and was restored when the position command is used next time.

Summary of the Invention

It is an object of the present invention to provide a servo controller that can reduce, when the first control is performed, the synchronization error which may arise between a master driving source and a slave driving source.

In order to attain the above object, in accordance with an aspect of the present invention, there is provided a servo controller that controls a master driving source for driving a driving shaft in synchronism with a slave driving source for driving a driven shaft in a prescribed timing relative to the driving shaft, comprising a position control section that performs position control based on a positional deviation representing a difference between a position command value given to said slave driving source and a feedback value detected by said slave driving source, an operational section that calculates a synchronization error as a difference between a positional deviation on a side of a master driving source and a positional deviation on a side of a slave driving source, and a correction data calculating section that calculates the first correction data for correcting said positional deviation on the side of the slave driving source based on said position command value given to said slave driving source so as to reduce the synchronization error.

In accordance with the construction as described above, since the correction data calculating section calculates the first correction data for correcting the positional deviation on the side of the slave driving source based on the position command value and the first correction data are added to the positional deviation on the side of the slave driving source, the control can be performed such that the synchronization error between the master driving source and the slave driving source may be reduced. Thus, when the first control is performed and the effect of learning cannot be obtained, highly precise and efficient processing can be performed, and reliability of the product quality can be improved. It is also possible to flexibly accommodate to change of the control method.

In the servo controller as described above, it is also possible to provide two such slave driving sources so as to drive a first driven shaft and a second driven shaft in a tandem structure parallel to each other. With such construction, by driving the first feed shaft and the second feed shaft in tandem structure with the two slave driving sources, respectively, the load of each driving source can be reduced so that the tracking control and the stability can be improved. The size of the driving source used can be thereby reduced and beneficial effect can be obtained in terms of economy.

In the servo controller as described above, it is also possible to apply the correction data calculated for one of two driven shafts to the other of the two driven shafts. With such construction, the correction data calculating section can be shared by the two slave driving sources to thereby avoid complication of the structure of the servo controller.

In the servo controller as described above, it is also possible to provide a learning control section that calculates second correction data to be added to the positional deviation on the side of the slave driving source in order to converge the synchronization error to zero by means of learning control. In the correction data calculating section, a transfer function for identifying a linear relation between the position command value given to the slave driving source and the second correction data, can be used to calculate the first correction data from the position command value in order to add the first correction data to the positional deviation on the side of the slave driving source. Thus, although a learning control cannot be used to reduce the synchronization error in the first time control in which no reference data are available, the correction data calculating section can be used to calculate correction data for calculating the positional deviation, so that the synchronization error can be reduced, when the first control is performed.

It is also possible, in the servo controller as described above, to provide a learning control section that calculates second correction data to be added to the positional deviation on the side of the slave driving source in order to converge the synchronization error to zero by means of a learning control. By setting the first correction data calculated by the correction data calculating section as an initial value in an initial value setting division of the learning control section, the second correction data can be calculated from the initial value. By adding the second correction data to the positional deviation on the side of the slave driving source, the synchronization error can be reduced, when the first control is performed.

By storing the command pattern of the position command value and the reference data referenced in calculating the second correction data, it is possible to give the position command value to the correction data calculating section so as to output the reference data and to estimate the synchronization error as the first correction data from the reference data.

In the servo controller as described above, the correction data calculating section may also include a compensator for calculating the first correction data, and an adaptive arithmetic logic unit for iteratively calculating parameters of the compensator from the position command value and the synchronization error. When the first control is performed, it is possible to reduce the synchronization error by determining the correction data using an adaptive algorithm as the adaptive arithmetic logic unit based on the digital filter as the compensator and the parameters and filter coefficients of the compensator and the position command value and the synchronization error.

In the servo controller as described above, the correction data calculating section may also include a compensator for calculating the first correction data, an adjustor for adjusting the output of the first correction data, and an adaptive arithmetic logic unit for iteratively calculating the parameter of the compensator from the position command value, the synchronization error, and the positional deviation. When the first control is performed, it is possible to reduce the synchronization error, and if there is a delay in the synchronization error, to easily adjust the value of the synchronization error, by determining a digital filter as the compensator and the parameters and filter coefficients of the compensator, and, based on the position command value, the synchronization error, and the positional deviation, by determining the correction data using an adaptive algorithm as the adaptive arithmetic logic unit, and adjusting the correction data by using the adjustor to multiply.

In the servo controller as described above, it is also possible to use the driving shaft as the rotational shaft, and the first driven shaft and the second driven shaft as the feed axes. In this way, even if the rotational shaft is likely to be affected by the moment of inertia and to give rise to a large positional deviation, the synchronization accuracy of the synchronous control can be improved.

In the servo controller as described above, it is also possible to provide the operational section in the host controller. By providing the operational section in the host controller, the circuit construction of the servo controller can be simplified.

In the servo controller as described above, the processing may be a tapping operation for forming an internal thread on a work piece. Since the processing that is performed repeatedly is a tapping operation, the synchronization error of the reciprocating rigid tap between the forward rotation and the reverse rotation can be suppressed, and highly precise and efficient processing is possible.

In the servo controller as described above, the processing may be a thread cutting operation for forming an external thread on an outer circumferential surface of a work piece. Since the processing that is performed repeatedly is a thread cutting operation, when a complete thread is formed by a prescribed number of repeated passes, the repeating accuracy for each pass can be improved, so that positional deviation can be suppressed and a thread can be formed with high precision.

Brief Description of the Drawings

The above and other objects, features and advantages of the present invention will become more apparent from the following description of preferred embodiments with reference to appended drawings, in which:

Fig. 1 is a block diagram of a servo controller according to a first embodiment of the present invention;
Fig. 2 is a view for explaining the construction of the learning control section of the servo controller shown in Fig. 1;
Fig. 3 is a block diagram showing a variant of the servo controller shown in Fig. 1;
Fig. 4 is a block diagram showing a servo controller according to a second embodiment of the present invention;
Fig. 5 is a view for explaining the construction of the learning control section of the servo controller shown in Fig. 4;
Fig. 6 is a view showing an example of a typical command pattern stored in association with correction data sequence in the correction data calculating section of the servo controller shown in Fig. 4;
Fig. 7 is a block diagram of a servo controller according to a third embodiment of the present invention;
Fig. 8 is a view for explaining the construction of the correction data calculating section of the servo controller shown in Fig. 7;
Fig. 9 is a view for explaining a variant of the correction data calculating section of the servo controller shown in Fig. 7;
Fig. 10 is a block diagram of a servo controller according to a fourth embodiment of the present invention; and
Fig. 11 is a view for explaining the construction of the correction data calculating section of the servo controller shown in Fig. 10.

Detailed Description

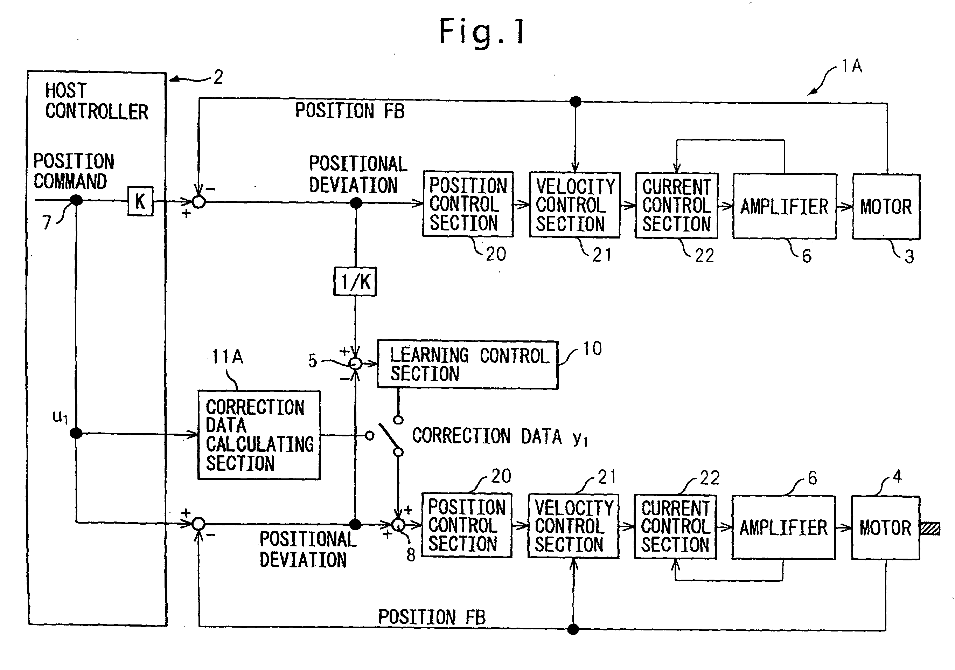

The present invention will be described in detail with reference to drawings showing specific examples of the preferred embodiments thereof. Fig. 1 is a block diagram of a servo controller according to a first embodiment of the present invention. A servo controller 1A according to this embodiment is connected via a shared memory (not shown) to a host controller 2. A movement command value from the host controller 2 is outputted to the servo controller, and is a command value for synchronously controlling a spindle motor (master servo motor) 3 which drives a main shaft (driving shaft) of a machine tool and a feed servo motor (slave servo motor) 4 which drives a driven shaft in linear movement. A positional deviation is obtained by subtracting, from a position command value, a position feedback value obtained from a position detector (not shown) mounted on the servo motors 3, 4 for detecting the position of the servo motors 3, 4. On the slave side, a correction data (second correction data) from a learning control section 10 are added to the positional deviation to correct the positional deviation. In a position control, the corrected positional deviation is multiplied by a position gain to obtain a velocity command. In a velocity control, a velocity deviation is obtained by subtracting, from the velocity command value, a feedback value from a velocity detector (not shown) which detects the velocity of the servo motors 3, 4, and a current command is obtained from the velocity deviation by means of proportional-integral control, or the like. In a current control, a current deviation is obtained by subtracting a current feedback value detected by a current detector (not shown) from the current command value, and this current deviation is amplified by a current amplifier for driving control of the servo motors.

Thus, as described above, a flow of control of the servo controller is generally the same as the control flow in the conventional servo controller, except that, in the servo controller 1A of the present embodiment, the second correction data are calculated by learning control of the synchronization error between the master side and the slave side, and that means (correction data calculating means) are provided that can reduce the synchronization error, when the first control is performed and the effect of learning is not available.

The host controller 2 has a programmable controller (not shown), an operating panel, peripheral devices, and the like, connected thereto. The shared memory is a memory for delivering the information outputted from the host controller 2 to a processor of the servo controller 1A, or on the contrary, for delivering various information outputted from the servo controller 1A to the host controller 2.

The servo controller 1A having a processor, a ROM, a RAM, and the like, forms a digital servo circuit comprising an operational section 5 for calculating the synchronization error of the pair of servo motors 3, 4, the learning control section 10 for calculating the correction data based on the synchronization error, and a correction data calculating section 11A for calculating the correction data (first correction data) for the first time control in which no effect of learning is available. By providing the servo controller 1A with the learning control section 10, the tracking capability of the feed servo motor 4 relative to the spindle motor 3 is remarkably improved and allows highly precise and efficient processing to be performed. By providing the servo controller 1A with the correction data calculating section 11A, highly precise processing can be performed with small synchronization error, when the first control is performed, in which no effect of learning is available.

The digital servo circuit is comparable to a conventional circuit, and controls the spindle motor 3 for driving the main shaft and the feed servo motor 4 for feeding a cutting tool (not shown) in a direction of the feed shaft, respectively, by position loop control and velocity loop control based on the feedback signal as well as by current loop control based on the current feedback signal from an amplifier 6 of a transistor inverter and the like.

With a machine tool provided with the servo controller having the digital servo circuit, machine processing of an internal thread, for example, can be made on a work piece fastened to a table using a tapping tool chucked by the spindle shaft (not shown). In this processing, the feed servo motor 4 is adapted to be synchronously controlled such that the tapping tool is moved in the direction of feed shaft at a feed rate obtained by multiplying the rotational speed of the spindle motor 3 with the pitch of the thread as a conversion factor.

The control flow of the servo controller 1A controlling the spindle motor 3 and the feed servo motor 4 will be described below in detail with reference to Fig. 1.

First, the movement (position) command value per unit time outputted from a host controller 2 is divided at a branch point 7 into two directions, and one movement command value is outputted, after being multiplied with a constant ratio as a conversion factor K, to the main shaft side circuit controlling the spindle motor 3 of the servo controller 1A, and the other movement command value is outputted, as it is, to the feed shaft side circuit controlling the feed servo motor 4 of the servo controller 1A.

In the main shaft side circuit, the positional deviation is obtained by subtracting the position feedback value outputted from the position detector such as a pulse coder for detecting the position of the spindle motor 3 from the movement command value multiplied by the conversion factor (position loop control). Next, in a position control section 20, the positional deviation is multiplied by the position loop gain to obtain the velocity command value. Then, in a velocity control section 21, after the velocity deviation is obtained by subtracting the velocity feedback value outputted from the velocity detector for detecting the velocity of the spindle motor 3 from the velocity command value (velocity loop control), proportional-integral control (PI control) is performed on this velocity deviation to obtain the current command value (torque command). In a current control section 22, the current deviation is obtained by subtracting the current feedback value outputted from the amplifier 6 from the current command value (current loop control), and the spindle motor 3 is driven via the amplifier 6 so as to rotate the work piece via a speed reduction mechanism (not shown).

Also in the feed shaft side circuit, the position loop control, the velocity loop control and the current loop control are performed as in the main shaft side circuit, so as to drive the feed servo motor 4, and a feed screw is rotated via a speed reduction mechanism (not shown) to feed the tapping tool in the direction of the feed shaft.

In an operational section 5, the synchronization error is obtained as the difference between the positional deviation of the main shaft side circuit and the positional deviation of the feed side circuit. The positional deviation of the main shaft side circuit is obtained by multiplying the positional deviation of the spindle motor 3 by a reverse conversion factor ($K^{-1}$) so that it is expressed in the same unit as the positional deviation of the feed side circuit. By thus expressing the positional deviations of the main shaft side circuit and the feed side circuit in same unit, the synchronization error due to the difference of servo characteristics of the two motors 3, 4 can be obtained.

The learning control section 10 receives the synchronization error from an operational section 7, and based on the synchronization error, calculates the correction data (second correction data) for correcting the positional deviation of the feed servo motor 4. By adding the calculated correction data to the positional deviation at an adding point 8, processing is performed so as to reduce the synchronization error between the two motors 3, 4. Based on the corrected positional deviation, the feed servo motor 4 is driven with the timing in a constant ratio maintained relative to the spindle motor 3.

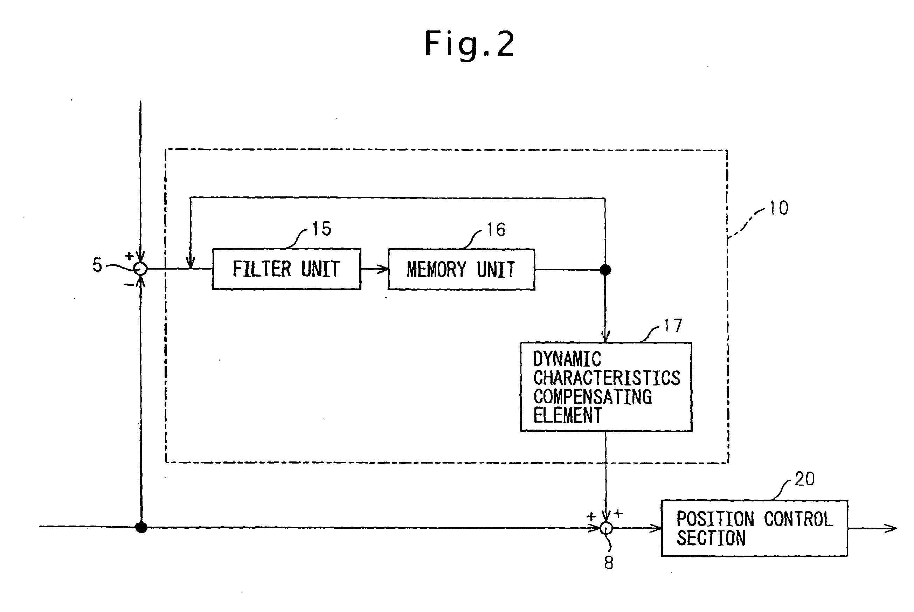

More specifically, as shown in Fig. 2, the learning control section comprises a filter unit 15 for limiting bandwidth, a memory unit 16 for storing the correction data, and a dynamic characteristics compensating element 17 for compensating the phase delay or the gain drop of the feed servo motor 4 to be controlled. The memory unit 16 has memory domains corresponding to the sampling number, and in processing the work piece with a predetermined amount of cutting depth, stores a multiplicity of correction data calculated on the basis of the detected synchronization error in a predetermined sampling time to the corresponding memory domains.

The old correction data stored in the memory unit 16 are read out for each predetermined sampling time during the next processing to be moved in the same path as the previous processing, and are added to the synchronization error calculated for the predetermined sampling time by the operational section 5, and after being subjected to filtering processing, are stored in the memory unit 16 as renewed correction data. On the other hand, the old correction data read out from the memory 16 are compensated for the phase delay and gain drop, and added to the positional deviation at the adding point 8. In this way, each time when the machine processing is repeated, the processing is performed such that the synchronization error of the two motors 3, 4 becomes smaller, resulting in high precision processing. Learning control, however, has a problem that the synchronization error cannot be reduced in the first time control.

The correction data calculating section 11A is a means for compensating the first time learning control. In the correction data calculating section 11A, a correction data for reducing the synchronization error of the spindle motor 3 and the feed motor 4 based on the position command value outputted from the host controller 2 are calculated. The position command value inputted and the correction data outputted are related to each other via a transfer function. The transfer function is obtained by identification (estimation) from learning control of the typical past tapping operation. Specifically, let position command value sequence $u_i$ for each sampling be an input, and let the correction data sequence $y_i$ obtained when the synchronization error converges to zero be an output, then the transfer function G can be identified from the following equation.

$$y_i = G \cdot u_i + H \cdot e$$

where e is a noise source and H is a noise characteristics.

As identification model, various models can be considered, for example, ARX model, ARMAX model, output error (OE) model, Box-Jenkinds model, state space model, and the like. In the present embodiment, ARX model (autoregressive model with exogenous input) will be described as an example. This model can be represented by the following linear difference equations.

$$A(z)y_1(t) = B(z)u_1(t-nk) + e(t)$$

$$A(z) = 1 + a_1 z^{-1} + a_2 z^{-2} + \quad + a_{na} z^{-na}$$

$$B(z) = b_0 + b_1 z^{-1} + b_2 z^{-2} + \quad + b_{nb} z^{-nb}$$

where na is the number of poles, nb is the number of zeros, and nk is a delay. nk is a pure time delay of the system (dead time). Thus, if there is no dead time in the control system, nk is generally equal to 1. For a system with plural inputs, nb and nk are row vectors. Parameters ai, bj are calculated by using the least square method. Transfer function $G = B(z)/A(z)$ can be estimated in this way.

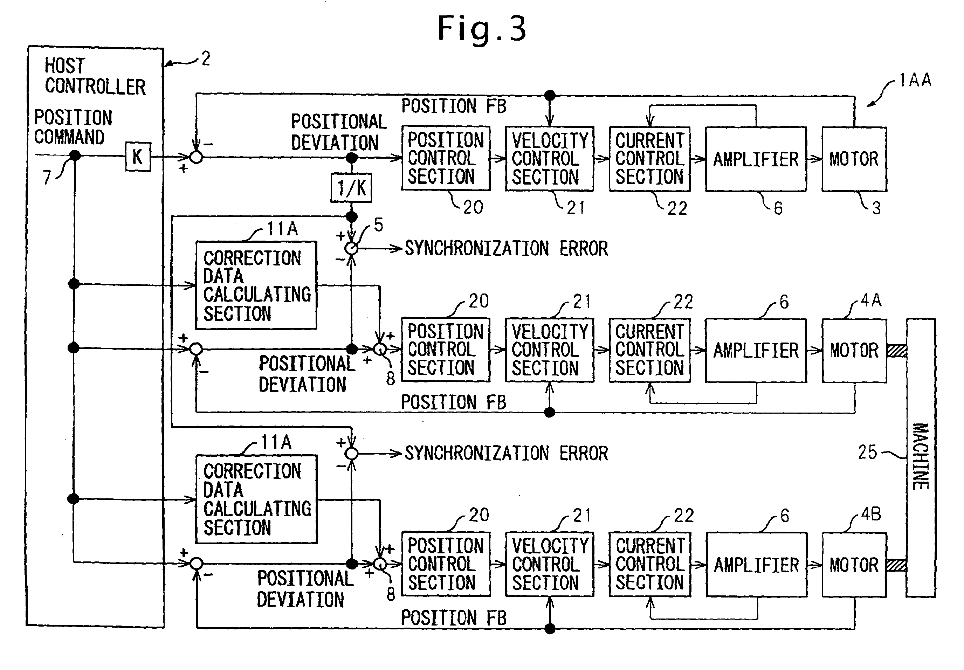

Fig. 3 is a block diagram showing a variant of the servo controller of the first embodiment. The servo controller 1AA is intended to control two feed servo motors 4A, 4B. The machine tool 25 having two feed servo motors 4A, 4B in tandem structure is of a general type. By using two feed servo motors 4A, 4B, load is reduced so that the driven component can be driven stably with good tracking capability relative to a spindle motor on the master side. Therefore, miniaturization of the motors 4A, 4B is also possible. Conversely, by providing a plurality of motors 4A, 4B, the machine tool 25 can more easily accommodate to an increase of power output.

In Fig. 3, the servo controller 1AA differs from the servo controller 1A in that it comprises two correction data calculating sections 11A, 11A. Each correction data calculating section 11A is same as the correction data calculating sections 11A of the first embodiment, and calculates the correction data from the position command value. Since the positional deviation of the two motors 4A, 4B is individually corrected by the correction data calculating section 11A, the machine tool 25 having tandem structure can be used to perform highly precise processing.

As has been described above, in accordance with the present embodiment, although the learning control alone cannot reduce the synchronization error in the first time control, the correction data calculating section 11A can allows the correction data to be obtained by means of the transfer function upon input of the position command value, so that the synchronization error can be reduce from the first control and highly efficient and precise processing is possible.

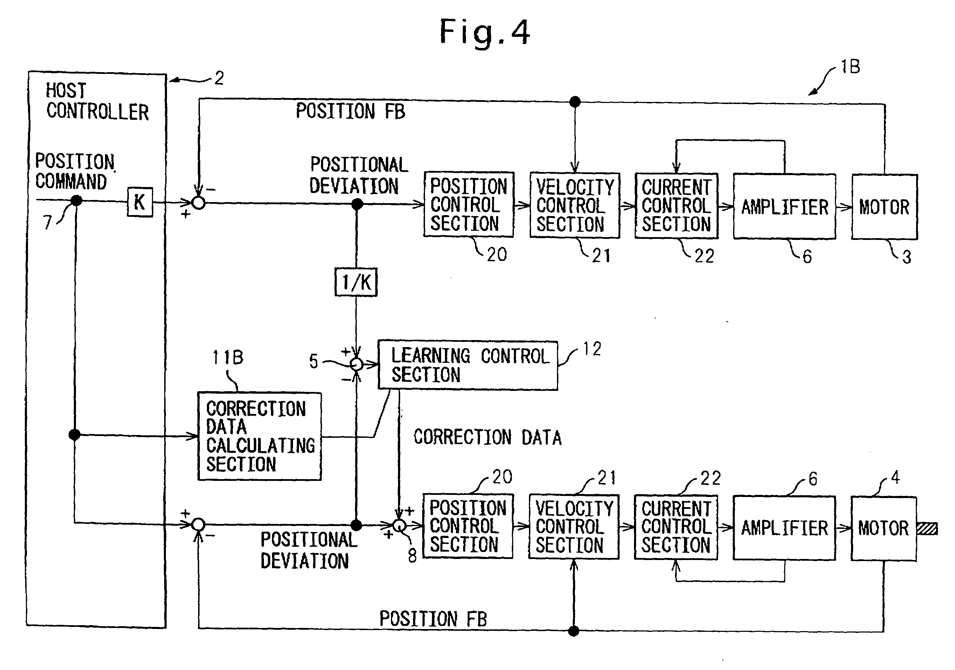

Next, a servo controller according to a second embodiment of the present invention will be described with reference to Figs. 4 to 7. Effect of learning cannot be obtained in the first time control because there is no reference data (data of synchronization error) available in the learning control section 16. The correction data calculating section 11B of the present embodiment provides the reference data to the initial value setting division 18 of the learning control section 12 so that the servo controller 1B according to the present embodiment can reduce the synchronization error, when the first control is performed.

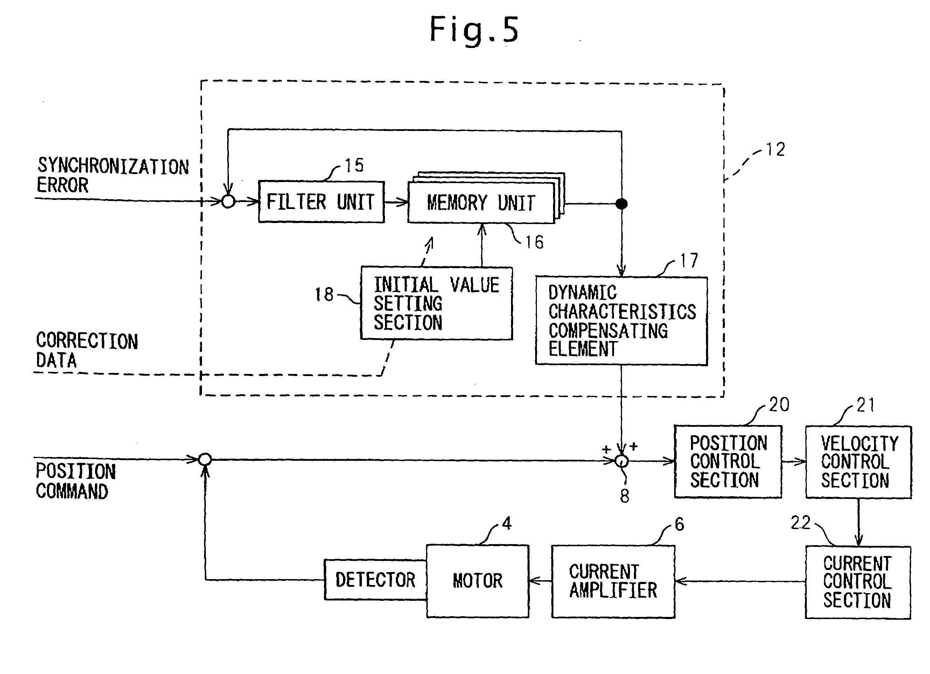

As shown in Fig. 5, the learning control section 12 comprises a filter unit 15 for limiting the bandwidth, a memory unit 16 for storing the correction data, a dynamic characteristics compensating element 17 for compensating the phase delay or the gain drop of the feed servo motor 4 to be controlled, and in addition, an initial value setting division 18 for setting the data (synchronization error) outputted from the correction data calculating section 11B.

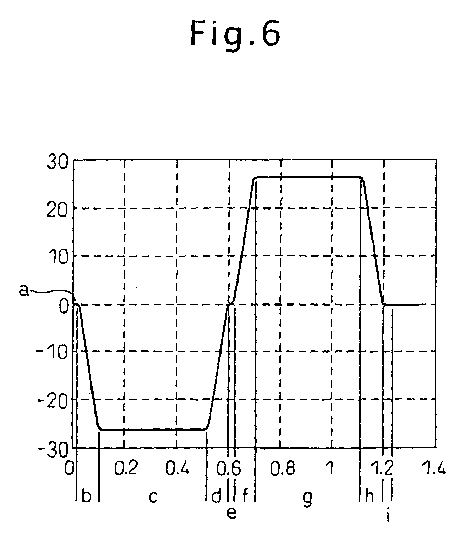

In the correction data calculating section 11B, the correction data obtained by the learning control section 12 when the synchronization error is reduced to 0 by the learning control are stored together with the command pattern of the position command value given to the feed servo motor 4 as the reference data. Based on the reference data, the correction data calculating section 11B estimates the synchronization error from the pattern of acceleration and deceleration of the position command, and outputs this synchronization error to the learning control section. As shown in Fig. 6, one period of the typical command pattern is shown as a rectangular wave. This waveform consists of nine regions, that is, a first pause region a, a first acceleration region b, a first constant velocity region c, a first deceleration region d, a second pause region e, a second acceleration region f, a second constant velocity region g, a second deceleration region h, and a third pause region i. In individual regions, there exists a correction data sequence with reference to time. The correction data sequences associated with individual regions are stored in the correction data calculating section 11B.

As an example, the control flow at the time of tapping command (position command) given by the host controller 2 will be described below. For simplicity, an exemplary case of same tapping operation having different thread length is described. When a typical tapping command is given, it is determined to which region (segment) the command is relevant. Since a command relevant to the first pause region a is given first, the reference data sequence corresponding to the first pause region a is set as the initial value in the learning memory via the initial value setting division 18. Next, the command is watched until the command relevant to the first acceleration region b is given. When the command relevant to the first acceleration region b is given, the reference data sequence for the first acceleration region b is set as the initial value in the learning memory. Next, in the same manner, the command is watched until the command relevant to the first constant velocity region c is given, and when the command relevant to the first constant velocity region c is given, the reference data sequence for the first constant velocity region c is set as the initial value in the learning memory. In the same manner, the reference data sequences are successively set as the initial values until the third pause region i. Thus, the reference data at the time of typical tapping command are set as initial values in the learning memory, so that the correction data can be outputted from the learning control section, and the synchronization error can be reduced, when the first control is performed.

Duplicate explanation of the constituents common to the present embodiment and the first embodiment will be omitted. Also in the present embodiment, as in the first embodiment, the servo controller 1B applicable to a tandem structure may be provided.

Thus, in accordance with the second embodiment, when the command value pattern of the position command value to the feed servo motor 4 is given, the reference data (synchronization error) can be estimated, and the estimated reference data can be provided as the initial value for the learning control, so that the control for reduction of the synchronization error can be performed, when no effect of learning is available.

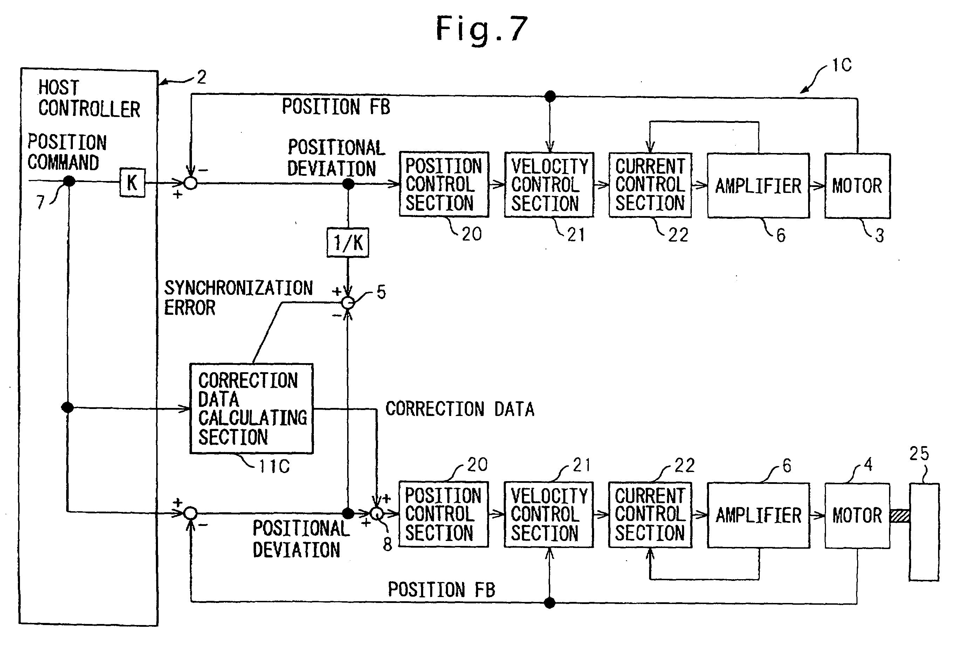

Next, a servo controller according to a third embodiment of the present invention will be described with reference to Figs. 7 to 9. The servo controller 1C according to this embodiment differs from those of the first and the second embodiment in that the correction data calculating section 11C calculates the correction data by means of adaptive control.

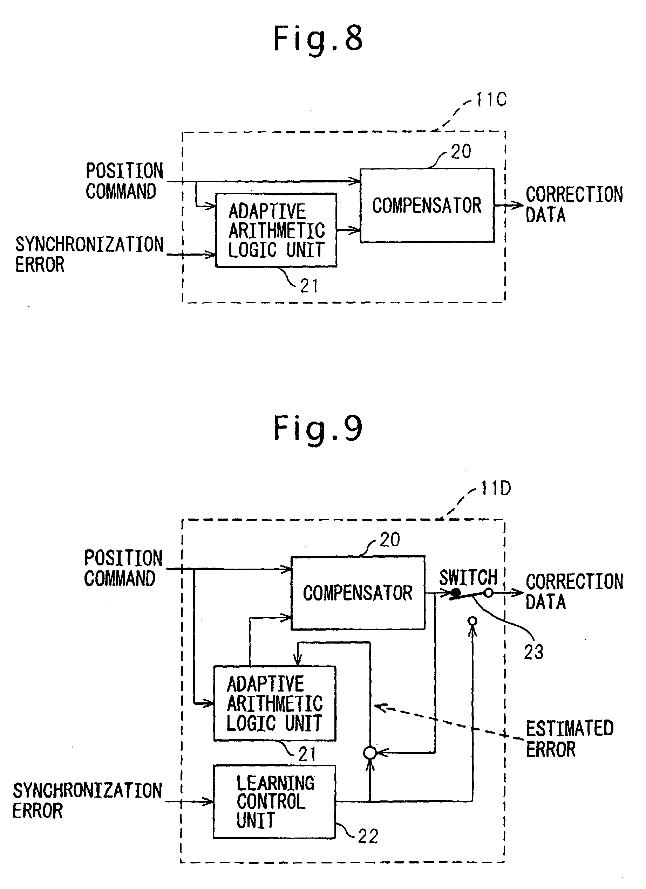

As shown in Fig. 8, the correction data calculating section 11C comprises a compensator 20 as a digital filter, and an adaptive arithmetic logic unit 21 for determining the parameters and the filter coefficients of the compensator 20. The compensator 20 is composed of a FIR type or IIR type filter. The adaptive arithmetic logic unit 21 determines the parameters of the compensator 20, that is, the filter coefficients, so as to minimize the synchronization error by means of an adaptive algorithm. The position command value and the synchronization error are input to the adaptive arithmetic logic unit 21. The adaptive algorithm performs iterative calculation using the steepest descent method so as to converge the evaluation function containing the synchronization error to zero. For example, the filter coefficient Ax is calculated from following equation.

$$Ax\ (n+1)\ =\ Ax\ (n)\ +K \cdot u(n) \cdot e(n)$$

where x is the number of 1 ~ mth order of the filter, K is a constant, u is the position command and e is the synchronization error. The (n+1)-th filter coefficient can be obtained from the n-th filter coefficient, the position command value and the synchronization error.

Fig. 9 shows the correction data calculating section according to a variant of the present embodiment. The correction data calculating section 11D of this variant comprises a compensator 20 as a digital filter, an adaptive arithmetic logic unit 21 for determining the parameters and the filter coefficients of the compensator 20, a learning controller 22, and a switch 23. The position command value is input to the adaptive arithmetic logic unit 21, and the synchronization error is input to the learning controller 22.

The learning controller 22 corresponds to the learning control section 10, 12 in the first and the second embodiments. The correction data calculating section 11D can selectively switch between the adaptive control and the learning control by means of the switch 23. Thus, when the effect of learning cannot be obtained from the learning controller 22, the correction data calculating section 11D can select the adaptive control, and when the effect of learning can be obtained by repeated control, the correction data calculating section 11D can select the learning control.

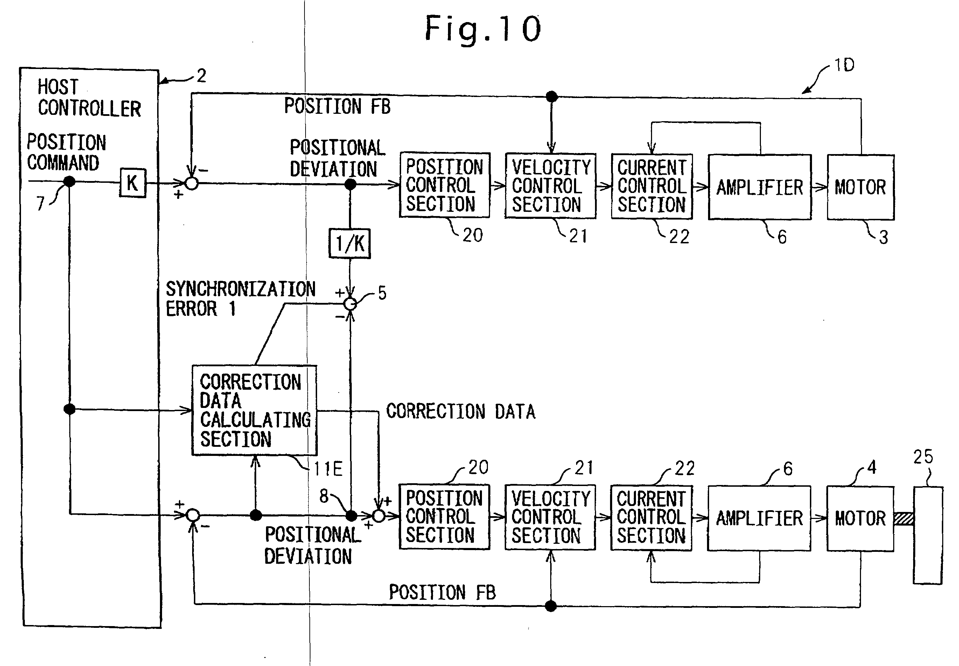

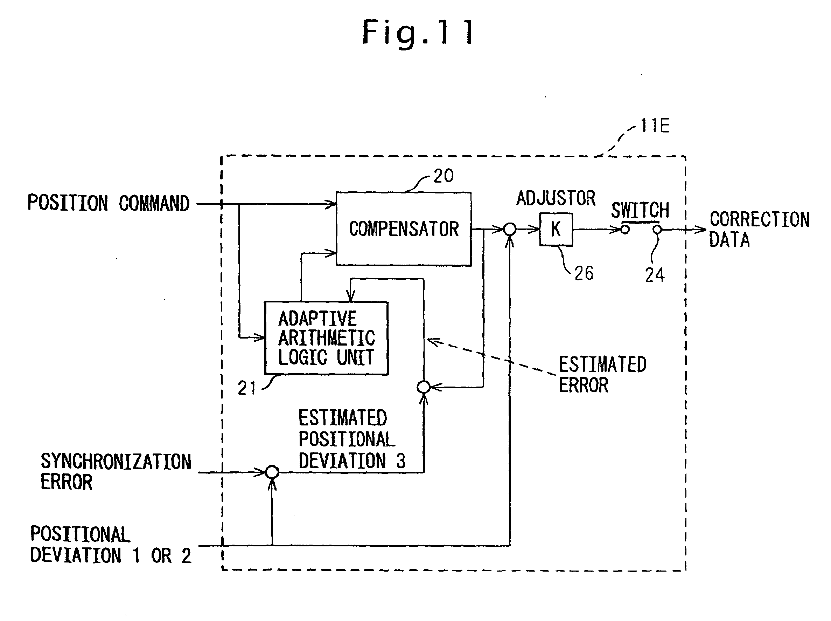

Next, a servo controller according to a fourth embodiment of the present invention will be described with reference to Figs. 10 - 11. A servo controller 1D of this embodiment can estimate the synchronization error without delay. A correction data calculating section 11E comprises, in addition to a compensator 20 and an adaptive arithmetic logic unit 21, an adjustor 26 and an ON/OFF switch 24. The correction data calculating section 11E, after performing adaptive control to converge the estimated error, turns the switch 24 ON to stop the operation of the adaptive arithmetic logic unit 21 and performs control with fixed filter coefficients. If the synchronization error contains delay, the synchronization error can be reduced by estimating the estimated positional deviation from the position command value.

The present invention is not limited to the above-described embodiments, but can be implemented in various modifications. For example, also in the third and the fourth embodiments, the servo controller applicable to tandem structure can be provided as in the first embodiment.

**Claims**

1. A servo controller (1A, 1AA, 1B, 1C, 1D) for synchronously controlling a master driving source (3) that drives a driving shaft and a slave driving source (4) that drives a driven shaft in a prescribed timing relative to said driving shaft, **characterized in that** said servo controller comprises:

   a position control section (20) that performs a position control based on a positional deviation which is a difference between a position command value given to said slave driving source (4) and a feedback value detected from said slave driving source (4);
   an operational section (5) that calculates a synchronization error which is a difference between a positional deviation on a side of said master driving source (3) and a positional deviation on a side of said slave driving source (4); and,
   a correction data calculating section (11A, 11B, 11C, 11D, 11E) that calculates first correction data for correcting said positional deviation on the side of said slave driving source (4) based on said position command value given to said slave driving source (4) so as to reduce said synchronization error.

2. A servo controller (1AA) as claimed in claim 1,
   **characterized in that** there are provided two said slave driving sources (4), each slave driving source (4) respectively driving a first driven shaft and a second driven shaft in a tandem structure in parallel to each other.

3. A servo controller (1AA) as claimed in claim 2,
   **characterized in that** said first correction data calculated for one of two driven shafts are also applied to the other of two driven shafts.

4. A servo controller (1A, 1AA) as claimed in claim 1,
   further comprising a learning control section (10) that calculates second correction data to be added to said positional deviation on the side of said slave driving source (4) in order to converge said synchronization error to 0 by means of a learning control,
   **characterized in that** a transfer function that identifies a linear relation between said position command value given to said slave driving source (4) and said second correction data is used in said correction data calculating section (11A) to calculate said first correction data, and that said first correction data are added to said positional deviation on the side of said slave driving source(4).

5. A servo controller (1B) as claimed in claim 1,
further comprising a learning control section (12) that calculates second correction data to be added to said positional deviation on the side of said slave driving source (4) in order to converge said synchronization error to 0 by means of a learning control,
**characterized in that** said first correction data calculated by said correction error calculating section (11B) are set as initial value in said learning control section (12), and that said second correction data are calculated from said initial value, said second correction data being added to said positional deviation in said slave driving source(4).

6. A servo controller (1B) as claimed in claim 5,
**characterized in that** reference data to be referenced for calculating a command pattern of said position command value and said second correction data are stored in said correction data calculating section (11B), and that said reference data are outputted when said position command value is given to said correction data calculating section (12), said synchronization error as said first correction data being estimated from said reference data.

7. A servo controller (1C, 1D) as claimed in claim 1,
**characterized in that** said correction data calculating section (11C, 11D, 11E) has a compensator (20) for calculating said correction data, and an adaptive arithmetic logic unit (21) for iteratively calculating parameters of said compensator (20) from said position command value and said synchronization error.

8. A servo controller as claimed in claim 1,
**characterized in that** said correction data calculating section (1E) has a compensator (20) for calculating said first correction data, an adjustor (26) for adjusting an output of said first correction data, and an adaptive arithmetic logic unit (21) for iteratively calculating parameters of said compensator (20) from said position command value, said synchronization error, and said positional deviation.

9. A servo controller (1A, 1AA, 1B, 1C, 1D) as claimed in claim 1,
**characterized in that** said driving shaft is a rotational shaft and said first driven shaft and said second driven shaft are feed shafts.

10. A servo controller (1A, 1AA, 1B, 1C, 1D) as claimed in claim 1,
**characterized in that** said operational section (5) is provided in said host controller.

11. A servo controller (1A, 1AA, 1B, 1C, 1D) as claimed in claim 1,
**characterized in that** said processing is a tapping operation for forming an internal thread on a work piece.

12. A servo controller (1A, 1AA, 1B, 1C, 1D) as claimed in claim 1,
**characterized in that** said processing is a thread cutting operation for forming an external thread on an outer circumferential surface of a work piece.

# Fig.1

EP 1 967 924 A1

# Fig.2

EP 1 967 924 A1

# Fig.3

EP 1 967 924 A1

# Fig.4

# Fig.5

SYNCHRONIZATION ERROR

FILTER UNIT [15]

MEMORY UNIT [16]

INITIAL VALUE SETTING SECTION [18]

DYNAMIC CHARACTERISTICS COMPENSATING ELEMENT [17]

[12]

CORRECTION DATA

POSITION COMMAND

+ [8] +

POSITION CONTROL SECTION [20]

VELOCITY CONTROL SECTION [21]

CURRENT CONTROL SECTION [22]

DETECTOR

MOTOR [4]

CURRENT AMPLIFIER [6]

EP 1 967 924 A1

# Fig.6

Fig.7

HOST CONTROLLER

POSITION COMMAND

POSITION FB

POSITIONAL DEVIATION

POSITION CONTROL SECTION 20

VELOCITY CONTROL SECTION 21

CURRENT CONTROL SECTION 22

AMPLIFIER 6

MOTOR 3

1C

1/K 5

SYNCHRONIZATION ERROR

CORRECTION DATA CALCULATING SECTION 11C

CORRECTION DATA

POSITIONAL DEVIATION

POSITION CONTROL SECTION 20

VELOCITY CONTROL SECTION 21

CURRENT CONTROL SECTION 22

AMPLIFIER 6

MOTOR 4

25

POSITION FB

K 7

8

2

# Fig.8

# Fig.9

# Fig.10

EP 1 967 924 A1

# Fig.11

POSITION COMMAND

COMPENSATOR ~20

ADAPTIVE ARITHMETIC LOGIC UNIT

21

ESTIMATED POSITIONAL DEVIATION 3

SYNCHRONIZATION ERROR

POSITIONAL DEVIATION 1 OR 2

ADJUSTOR

K

26

SWITCH

24

CORRECTION DATA

ESTIMATED ERROR

11E

EP 1 967 924 A1

**European Patent Office**

**EUROPEAN SEARCH REPORT**

Application Number

EP 08 00 4174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 742 128 A (FANUC LTD [JP]) 10 January 2007 (2007-01-10) * the whole document * | 1-12 | INV. G05B19/19 |
| X | DE 44 32 143 A1 (SIEMENS AG [DE]) 14 March 1996 (1996-03-14) * the whole document * | 1-12 | |
| X | EP 1 566 713 A (FANUC LTD [JP]) 24 August 2005 (2005-08-24) * paragraphs [0016], [0019], [0041], [0042] * * figures 2,6 * | 1-12 | |
| A | US 5 019 763 A (KOMATSU TOSHITERU [JP]) 28 May 1991 (1991-05-28) * the whole document * | 1-12 | |
| A | EP 0 952 504 A (FANUC LTD [JP]) 27 October 1999 (1999-10-27) * the whole document * | 1-12 | |
| A | EP 1 324 167 A (FANUC LTD [JP]) 2 July 2003 (2003-07-02) * the whole document * | 1-12 | TECHNICAL FIELDS SEARCHED (IPC) G05B |
| A | WO 97/19889 A (SIEMAG TRANSPLAN GMBH [DE]; SCHNEIDER VOLKER RAINER [DE]; SCHUELL ECKH) 5 June 1997 (1997-06-05) * the whole document * | 7,8 | |

The present search report has been drawn up for all claims

| Place of search | Date of completion of the search | Examiner |
|---|---|---|
| Munich | 19 June 2008 | Marrone, Fabrizio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 00 4174

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2008

| Patent document cited in search report | | Publication date | Patent family member(s) | | Publication date |
|---|---|---|---|---|---|
| EP 1742128 | A | 10-01-2007 | JP | 2007042068 A | 15-02-2007 |
| | | | US | 2007007926 A1 | 11-01-2007 |
| DE 4432143 | A1 | 14-03-1996 | NONE | | |
| EP 1566713 | A | 24-08-2005 | CN | 1647881 A | 03-08-2005 |
| | | | JP | 2005216135 A | 11-08-2005 |
| | | | US | 2005168178 A1 | 04-08-2005 |
| US 5019763 | A | 28-05-1991 | JP | 2007098 C | 11-01-1996 |
| | | | JP | 2039304 A | 08-02-1990 |
| | | | JP | 7031529 B | 10-04-1995 |
| EP 0952504 | A | 27-10-1999 | JP | 11305839 A | 05-11-1999 |
| | | | US | 6046566 A | 04-04-2000 |
| EP 1324167 | A | 02-07-2003 | JP | 2003200332 A | 15-07-2003 |
| | | | US | 2003125831 A1 | 03-07-2003 |
| WO 9719889 | A | 05-06-1997 | AT | 177850 T | 15-04-1999 |
| | | | DE | 59505399 D1 | 22-04-1999 |
| | | | EP | 0806715 A1 | 12-11-1997 |
| | | | US | 6226558 B1 | 01-05-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004280772 A